# EUROPEAN PATENT SPECIFICATION

(11) **EP 2 936 765 B1**
(45) Date of publication and mention of the grant of the patent: **14.06.2017**
(21) Application number: 12890474.5
(22) Date of filing: 20.12.2012
(51) Int. Cl.: H04L 29/06, H04L 29/12, H04L 29/08

(54) **METHOD AND APPARATUS FOR HANDLING MESSAGES**
VERFAHREN UND VORRICHTUNG ZUR HANDHABUNG VON BENACHRICHTIGUNGEN
PROCÉDÉ ET APPAREIL POUR TRAITER DES MESSAGES

(43) Date of publication of application: 28.10.2015
(73) Proprietor: Nokia Technologies OY, 02610 Espoo (FI)
(72) Inventor: SAVOLAINEN, Teemu, FI-37120 Nokia (FI); KERAI, Kanji, London NW9 (GB)
(74) Representative: Seppo Laine Oy
(86) International application number: PCT/FI2012/051283
(87) International publication number: WO 2014/096505

(56) References cited:
- EP-A1- 2 466 830
- WO-A1-01/31881
- JP-A- 2008 141 466
- KR-A- 20100 105 086
- KR-A- 20120 061 099
- US-A1- 2003 028 654
- US-A1- 2009 185 549
- US-A1- 2010 202 355
- US-A1- 2012 163 362
- US-A1- 2013 028 095
- KUSHWAHA: 'The Next Generation IP based packet transmission for 6LoWPAN' 2012 2ND INTERNATIONAL CONFERENCE ON POWER , CONTROL AND EMBEDDED SYSTEMS (ICPCES 17 December 2012, pages 1 - 5, XP032397817

## Description

### TECHNICAL FIELD

The present application relates generally to managing messaging in packet-based communication.

### BACKGROUND

Packet-based communication may take place in a packet-switched network, wherein packets are exchanged between interconnected nodes each configured to process packets according to predefined rules. Where packets are furnished with header sections and payload sections, payload sections may comprise message data, be it text, data or multimedia content, and headers may comprise fields related to processing packets. The content of the packet overall may thus comprise a header and a payload.

A header may comprise several fields, such as a destination address field and a source address field, and optionally further fields as well. A destination address field may store an address, such as an internet protocol, IP, address, of a node that is the addressee of the packet in question. A source address field may store an address, such as an IP address, of a node that has originated the packet. Thus nodes comprised in the network may convey the packet toward the addressee node using the destination address, and upon receipt of the packet the addressee node may compile and send a response packet, setting in the response packet into the destination address field the address from the source address field of the original packet

A unicast address in a destination address field defines a single node as addressee of the packet. In contrast, a multicast address defines a plurality of nodes as addressees, in effect releasing a packet into a network with a multicast address in the destination address field will cause copies of the packet to be conveyed to nodes in a multicast group defined by the address. In a sense a multicast address serves as a logical identifier of a group of nodes. A broadcasted message is not addressed in particular to any individual node or even group, rather it may be sent to any nodes that happen to receive it.

In some packet-based networks, at least part of the connections between nodes are wireless. One technology used in wireless packet-based communication is Bluetooth or its Bluetooth LowPower, BT-LE, variants. Another is long term evolution, LTE.

Is some packet-based networks, header compression may be utilized to compress headers of packets in order to decrease a number of bits that need to be transported, and hence to save resources of the network such as power and bandwidth.

Document US2003/028654 discloses a method for content based switching, wherein XML or application data comprised in a packet is employed in selecting a destination server for the packet. Document EP2466830 discloses a method for multiphase decoding, wherein messages being communicated are opened and the information contained therein used to made connection management decisions. Document KR20120061099 discloses using a mapping table to obtain, using a compressed IPv6 address, an uncompressed IPv6 address and replacing the uncompressed IPv6 address into a message.

### SUMMARY

Various aspects of examples of the invention are set out in the claims.

According to a first aspect of the present invention, there is provided an apparatus, comprising means for receiving a data packet, means for determining, based on contents of the data packet, a new destination address for the packet, wherein the received data packet does not comprise the new destination address in a header field, means for inserting the new destination address into a destination address header field of the data packet and means for causing the data packet to be transmitted after the new destination address has been inserted, wherein the means for determining are configured to determine the new destination address by determining a compression context used to compress the data packet, and by selecting the new destination address based on the compression context.

According to a second aspect of the present invention, there is provided an apparatus, comprising means for forming a data packet, means for selecting a destination address for the data packet, means for defining contents of the data packet based at least in part on the selected destination address, wherein after the defining the data packet does not comprise the selected destination address in a header field, and means for causing the data packet to be transmitted, wherein the means for defining are configured to define the contents of the data packet by selecting a compression context based on the selected destination address, and applying the compression context to compress the data packet.

According to further aspects of the invention, there are provided methods associated with operation of apparatuses in accordance with the first and second aspects described above, and computer programs configured to cause such methods to be performed.

### BRIEF DESCRIPTION OF THE DRAWINGS

For a more complete understanding of example embodiments of the present invention, reference is now made to the following descriptions taken in connection with the accompanying drawings in which:
FIGURE 1 illustrates a system capable of supporting at least some embodiments of the present invention;
FIGURE 2 illustrates a block diagram of an apparatus 10 in accordance with an example embodiment of the invention;
FIGURE 3 illustrates a simple system capable of supporting at least some embodiments of the present invention;
FIGURE 4 illustrates a simple system capable of supporting at least some embodiments of the present invention;
FIGURE 5 is a signaling diagram illustrating operations in accordance with an example embodiment of the invention;
FIGURE 6 is a flowchart of an example method in accordance with at least some embodiments of the invention, and
FIGURE 7 is a flowchart of a second example method in accordance with at least some embodiments of the invention.

### DETAILED DESCRIPTION OF THE DRAWINGS

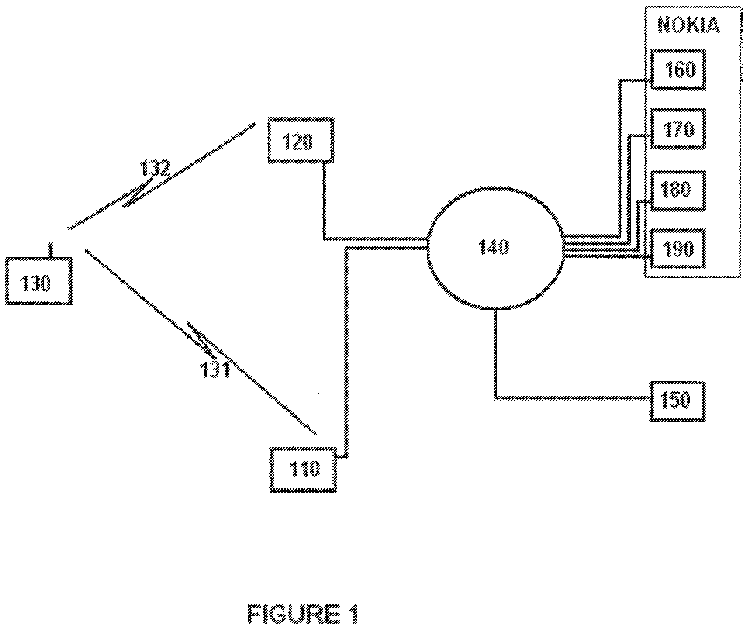

An example embodiment of the present invention and its potential advantages are understood by referring to FIGURES 1 through 7 of the drawings.

FIGURE 1 illustrates a system capable of supporting at least some embodiments of the present invention. Illustrated is device 130, which may comprise, for example, a sensor unit or in general a communication node. Device 130 may be a node with transmit-only functionality, in other words it may be furnished with a transmitter but no receiver, rendering it capable of sending information but not receiving information, such as acknowledgements, in return. Reasons for building transmit only nodes include saving resources in building the node and conserving battery power where the node is battery-powered. In some embodiments, device 130 comprises an advertiser node in the sense of Bluetooth terminology. Device 130 is illustrated as being in wireless contact with devices 110 and 120, which are in some embodiments observer nodes in the sense of Bluetooth terminology. While connections 131 and 132 between device 130 and device 110 and 120, respectively, are illustrated as wireless connections they are in some embodiments wired connections. Where device 130 is a transmit-only node, connections 131 and 132 are unidirectional, allowing transmission of information from device 130 but not to device 130.

Devices 110 and 120 are illustrated as being operatively connected to network 140. Both devices may have their own connection to network 140, as illustrated, or device 110 may be connected to network 140 via device 120, for example. In other embodiments, network 140 is an internal network of device 110. The connections between devices 110 and 120, and network 140, are illustrated as wired but in some embodiments they are at least in part wireless. Network 140 is to be understood as, in some embodiments, comprising a plurality of nodes and communication links interconnecting the nodes, to form network 140. In some embodiments, network 140 comprises only one node. In some embodiments, devices 110, 120, 150, 160, 170, 180 and 190 are comprised in one host. In some embodiments, at least one of the devices 110, 120, 150, 160, 170, 180 and 190 is absent.

Device 150 is illustrated as being operatively connected to network 140, and likewise devices 160, 170, 180 and 190, forming multicast group NOKIA, are illustrated as being operatively connected to network 140. The illustrated topology is only one example of how the devices forming the multicast group may be connected with network 140, in other embodiments at least some of the devices forming the multicast group may be connected with network 140 via further devices in the multicast group. For example, in one example device 160 is connected only to device 170, which is connected further to device 180, which is connected further to network 140, with device 190 having a connection to network 140 as illustrated. Network 140 may be based on IPv4 or IPv6 addressing, for example. In embodiments where network 140 is internal to device 110, also devices 150 and/or 160, 170, 180 and 190 may be internal to device 110.

Device 110 may be configured to receive data packets, or at least one data packet, from device 130. In some embodiments, device 130 is a Bluetooth Low-Energy transmit-only device. Device 130 may comprise, for example, a sensor unit configured to derive sensor data from physical measurement of at least one physical property of its surroundings. Sensor data may represent properties of a human body such as temperature, heart rate, blood sugar or blood alcohol level. Sensor data may represent meteorological properties such as temperature, atmospheric pressure or humidity. Sensor data may represent industrial or scientific properties such as temperature, flow rate, luminosity or a level of ionizing radiation. In some embodiments, device 130 is a communication device rather than a sensor unit, for example a communication device usable to transmit text-based messages from a user of device 130.

The data packets received in device 110 from device 130 may comprise a header portion and a payload portion, wherein the payload portion may comprise, for example, sensor data or at least one message. The data packets may comprise as a source address an address of device 130, or the source address field may be empty. The data packets may comprise as a destination address a multicast address, or the destination address field may be empty, for example to denote a broadcast data packet. A broad multicast IPv6 address, such as FF02::1 may effectively render the data packet a broadcast data packet. Responsive to receiving a data packet, device 110 may be configured to add or modify the destination address in the destination address field of the data packet. To determine a new destination address for the packet, device 110 may use as input the contents of the data packet, in detail device 110 may use at least one of the header and payload sections.

In some embodiments, device 110 retrieves the new destination address from the payload section of the data packet. In some embodiments, device 110 retrieves the new destination address from a header field other than the destination address field. In some embodiments, device 110 determines the new destination address based on presence or absence of certain header fields. Presence of a header field may comprise the header field containing any non-zero value. For example, device 110 may be configured to select a certain destination address responsive to a flow label header field comprising any non-zero value. In some embodiments, device 110 determines the new destination address based on at least one value comprised in at least one header field. For example, device 110 may have access to a mapping between header field values and destination addresses, such that device 110 is enabled to select a destination address based on a value in the header field, the value in the header and the selected destination address being different from each other. For example, device 110 may have access to a mapping between traffic class header values and destination addresses, such that device 110 is enabled to select a destination address based on a value in the traffic class header.

In some embodiments, device 110 determines the destination address by determining which compression context has been used to compress the data packet. Device 110 then selects the destination address based on the compression context, for example by using a mapping from compression context identities to destination addresses. In one example, a compression context identity may be determined as a LOWPAN_IPHC Context Identifier Extension, see RFC6282 and section 3.1.2 therein. For example, where the data packet comprises a destination address when it is received in device 110, device 110 may modify the scope section of the destination address based on the identity of the compression context used to compress the data packet, leaving other parts of the destination address unmodified. As an example, context ID 2 may cause device 110 to select a link-local scope for the destination address, and a context ID of 5 may cause device 110 to select a site-local scope for the destination. Alternatively, the entire destination address may be selected based on an identity of a compression context used to compress the data packet.

In some embodiments, device 130 is configured to select a new source address in addition to or alternatively to selecting a new destination address for the data packet. Determining a new source address may take place after determining a new destination address, wherein a new source address may be determined that is suitable for use with the determined new destination address. A new source address of suitable scope may be selected based on the destination address. Determining the new source address may follow similar principles as described above in connection with selecting a new destination address. For example, the new source address may be selected based on a different header field value than is used for selecting the new destination address. For example, the new destination address may be selected based on a value in a flow label header field, and a new source address may be selected based on a value in a traffic class header field. Alternatively, a header field, such as for example the flow label header field, may be partitioned to first and second parts to determine the new destination and source addresses, respectively. In some embodiments, device 110 determines both new addresses together, such that a certain value in a header field, or a certain compression context identity, causes device 110 to select a certain pair of new source and destination addresses. In these embodiments there is a mapping from, for example, a set of compression context identities to a set of address pairs. After the destination and/or source address of the data packet has been modified in device 110, device 110 may be configured to forward the data packet onward with the new address or addresses.

For example, when selecting a new source address, device 110 may be configured to use for the new source address a 64-bit global prefix in use in a network where device 110 is disposed. Device 110 may be configured to use, when selecting a new source address a Modified EUI-64 generated from a Bluetooth device address of device 130, for example. The new IPv6 source address would then comprise the 64-bit global prefix and the 64-bit Modified EUI-64 interface identifier.

Where medium access control, MAC, addresses are used, device 110 may be configured to either insert in the data packet a source MAC address of device 130 or to insert in the data packet a MAC address of device 110. Using the MAC of device 110 has the advantage that in case device 120 also receives the data packet from device 130, copies of the data packet forwarded from device 110 and device 120 would have different source MAC addresses, avoiding the situation where data packets originating from two distinct nodes would have the same source MAC address.

Where devices 110 and 120 are configured to insert into the data packets they receive source MAC addresses based on the MAC address of device 130, devices 110 and 120 may be configured to perform duplicate address detection. As a result of the duplicate address detection, one of devices 110 and 120 may be assigned as an owner of the source MAC address, and the owner device would reply on behalf of device 130. Alternatively, neither device 110 nor device 120 takes ownership of the source MAC address, and neither of them would reply on behalf of device 130. The latter alternative of no ownership may be advantageous, since it may decrease the risk of data packets transmitted from device 130 being lost.

In general, determining the new destination address and inserting it to the data packet may be comprised in a procedure of decompressing the data packet.

In general, there is provided a first apparatus, such as for example a device 110 or a control device for inclusion in device 110, to control device 110. The first apparatus comprises a receiver configured to receive a data packet. Where the first apparatus is a device 110, the receiver may comprise a radio or wire-line receiver configured to receive communications from outside the first apparatus. Where the first apparatus is a control device, such as for example a processor or chipset, the receiver may comprise an input port and pin, configured to receive information internally in a device 110 when the first apparatus is embedded in a device 110. The first apparatus may comprise at least one processing core configured to determine a new destination address for the received data packet. The determination may be based on contents of the data packet, such as the payload and/or header section of the data packet as described above. In some embodiments, the data packet as received does not explicitly comprise the new destination address as such in a header field. The at least one processing core is configured to, subsequent to determining the new destination address, insert the new destination address into a destination address header field of the data packet. The first apparatus further comprises a transmitter configured to cause the data packet, comprising the new destination address, to be transmitted. Where the first apparatus is a control device, the transmitter may comprise an output port and pin in the control device, wherein the control device is enabled to, when embedded in a device 110, cause a transmitter of device 110 to transmit the data packet by effecting signaling internally in device 110 by using the output port. Inserting the new destination address may be comprised in a decompression procedure performed on the data packet.

In some embodiments, determining the new destination address comprises determining a compression context used to compress the data packet, and selecting the new destination address based on the compression context. Selecting the new destination address based on the compression context may comprise using a mapping from a set of compression context identifiers to a set of new destination addresses. The mapping may be a one-to-one mapping. The set of compression context identifiers may be non-overlapping with the set of new destination addresses.

In some embodiments, the received data packet comprises, when initially received in the first apparatus, the new destination address in a non-header section. A non-header section may refer to a non-IP header section of a data packet, or to a section of a data packet that is not comprised in any header. In some embodiments, the at least one processing core is configured to determine the new destination address based on at least one of a service identifier, a channel identifier relating to the data packet and a header value comprised in the data packet. Using a service identifier may comprise using a mapping from a set of service identifiers to a set of new destination addresses. Using a channel identifier may comprise using a mapping from a set of channel identifiers to a set of new destination addresses. Using a header value may comprise using a mapping from a set of header values to a set of new destination addresses. An example of a service identifier is a Bluetooth Universally Unique Identifier, UID.

In some embodiments, the first apparatus is configured to select a new source address in addition to determining a new destination address, and to insert the new source address into a source address header field of the data packet in connection with inserting the new destination address into the data packet. The new source address may be selected using methods similar to the ones described above in connection with selecting a new destination address.

In some embodiments, the new destination address is of a type that advises recipients of the data packet to not respond to the data packet. For example, the new destination address may be comprised in a list or block of addresses defined as no-reply addresses. Defining the list or block as no-reply may be undertaken by an operator of devices 110 and 120, network 140 or by a networking standardization entity, for example.

In general there is provided a second apparatus, such as for example a device 130 or a control device for inclusion in device 130, to control device 130. The second apparatus may be, via computer instructions and at least one processor, be configured to form a data packet, wherein the data packet may comprise header and payload portions. The second apparatus may also be configured to select a destination address for the data packet, and define contents of the data packet based at least in part on the selected destination address, wherein after the defining the data packet does not comprise the selected destination address in a header field, and to cause the data packet to be transmitted. In general the second apparatus may be configured to insert payload data into the data packet, and subsequently define the contents of the data packet in part based on the selected destination address.

In some embodiments, the defining comprises selecting a compression context based on the selected destination address, and applying the selected compression context to compress the data packet. Selecting a compression context may comprise using a mapping from a set of destination addressed to a set of compression context identifiers. In some embodiments, the defining comprises modifying a header field value of the data packet to a value selected by using a mapping from a set of destination addresses to a set of possible header field values.

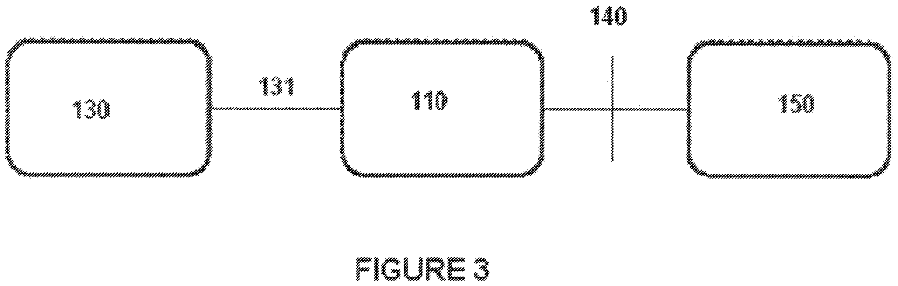

FIGURE 3 illustrates a simple system capable of supporting at least some embodiments of the present invention. Like elements are labeled with like reference signs as in FIG. 1. In the illustrated embodiment, device 130 comprises a BT-LE advertiser node. Device 130 is configured to provide at least one data packet to device 110 over wireless interface 131. Device 110 in the illustrated embodiment comprises a BL-LE observer node, which is configured to determine a new destination address for the at least one data packet, wherein a new destination address may be determined separately to each of the at least one data packet, such that not all of the at least one data packet receive the same new destination address. Device 110 is configured to, subsequently to determining the new destination address, and in some embodiments also a new source address, forward the data packet with the new address or addresses. In the illustrated embodiment, the data packet is sent from device 110, over network 140, to sink node 150. The new destination address may comprise an IPv6 multicast address.

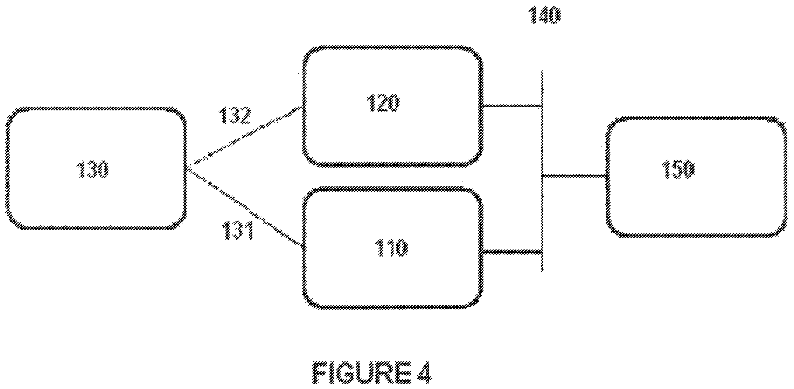

FIGURE 4 illustrates a simple system capable of supporting at least some embodiments of the present invention. The system of FIG. 4 resembles that of FIG. 3, except here device 120 acts as a second BT-LE observer node that is configured to receive at least one data packet from the BT-LE advertiser node 130. Like device 110, device 120 is configured to determine a new destination address for the at least one data packet received from device 130, and optionally also a new source address. Devices 110 and 120 may not each receive every data packet transmitted from device 130. In some embodiments, devices 110 and 120 each furnish the data packets they receive with their own addresses as new source address before forwarding them. In the illustrated embodiment, sink node 150 may receive more than one copy of at least one of the at least one data packet ultimately originating from device 130.

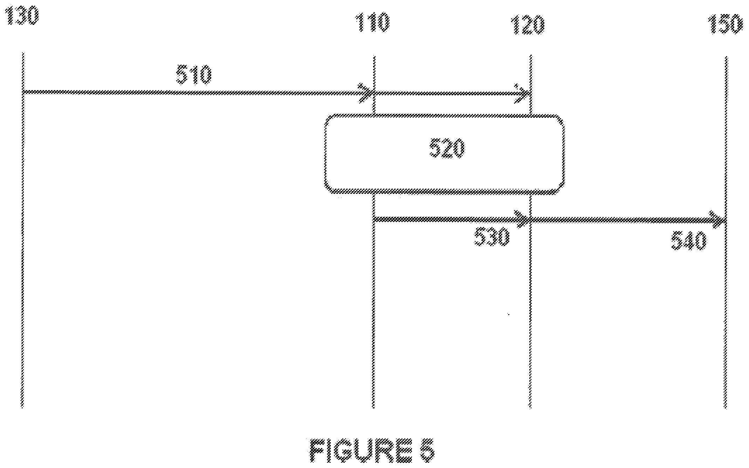

FIGURE 5 is a signaling diagram illustrating operations in accordance with an example embodiment of the invention. FIG.5 illustrates architecture similar to FIG. 4 with two BT-LE observer nodes, namely device 110 and device 120. However in FIG. 5, device 110 is connected to network 140 via device 120 instead of having a direct connection to network 140. In the illustrated example, device 130, acting as a BT-LE arvertiser, transmits a data packet in phase 510. The data packet is received in device 110 and device 120. In phase 520, devices 110 and 120 determine new destination addresses and, optionally, new source addresses for the data packet. Devices 110 and 120 are configured to determine a same new destination address for the packet based on contents of the data packet. In other words, devices 110 and 120 are configured to determine new destination addresses in a same way, and since the data packets received in the two devices are the same data packet, the determined new destination addresses are the same. Device 120 is configured to wait for a predetermined or random time, for example 10ms or a random time between 5ms and 15ms, before forwarding its copy of the data packet. In the illustrated example, device 120 notices that device 110 forwards, via device 120, a copy of the data packet, and device 120 will responsively discard its copy of the data packet since it would otherwise arrive in sink node 150 as a duplicate packet. Alternatively, where device 120 is configured as a high-priority node, it is configured to discard the data packet forwarded from device 110 and forward its own copy. This may be useful in embodiments where devices 110 and 120 furnish the data packets with their own source addresses, and device 120 is configured to ensure any replies from sink node 150 are addressed to it. This provides the advantage that the link between devices 110 and 120 is less loaded by response traffic.

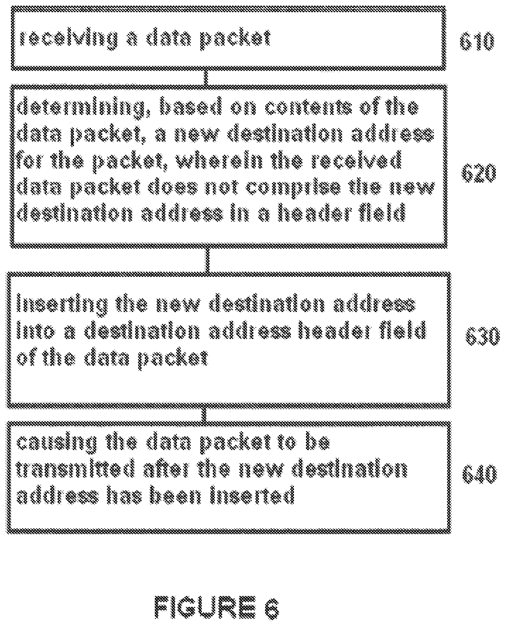

FIGURE 6 is a flowchart of an example method in accordance with at least some embodiments of the invention. The method of FIG. 6 may be performed in device 110, for example. In phase 610, a data packet is received. In phase 620, a new destination address for the data packet is determined, at least in part based on contents of the data packet. The data packet as received does not comprise the new destination address in a header field. In phase 630, the determined new destination address is inserted into a destination address header field of the data packet, and in phase 640 the data packet is caused to be transmitted. Phase 640 occurs after phase 630.

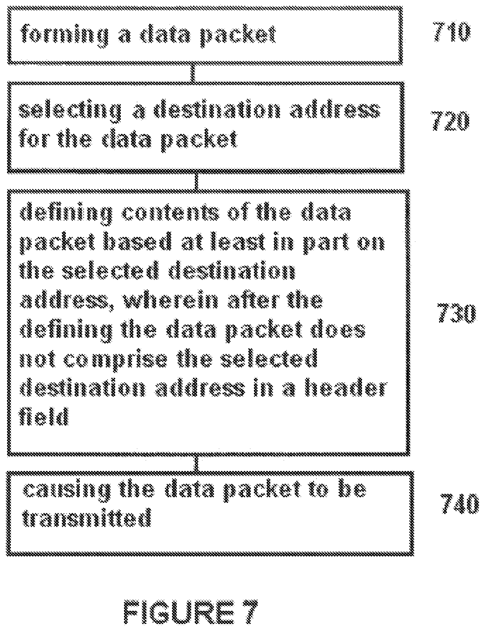

FIGURE 7 is a flowchart of a second example method in accordance with at least some embodiments of the invention. The method of FIG. 6 may be performed in device 130, for example. In phase 710 a data packet is formed. For example, the apparatus performing the method may obtain sensor data and insert it in a data packet template. In phase 720, a destination address is selected for the data packet, such as for example a multicast IP address. In phase 730, contents of the data packet are defined, based at least in part on the selected destination address. After the defining, the data packet does not comprise the selected destination address in a header field. However, the data packet may in some embodiments comprise the selected destination address in a payload section, or the data packet may comprise an address in a destination address header field, the address in the field being different from the selected destination address. In phase 740, the data packet is caused to be transmitted.

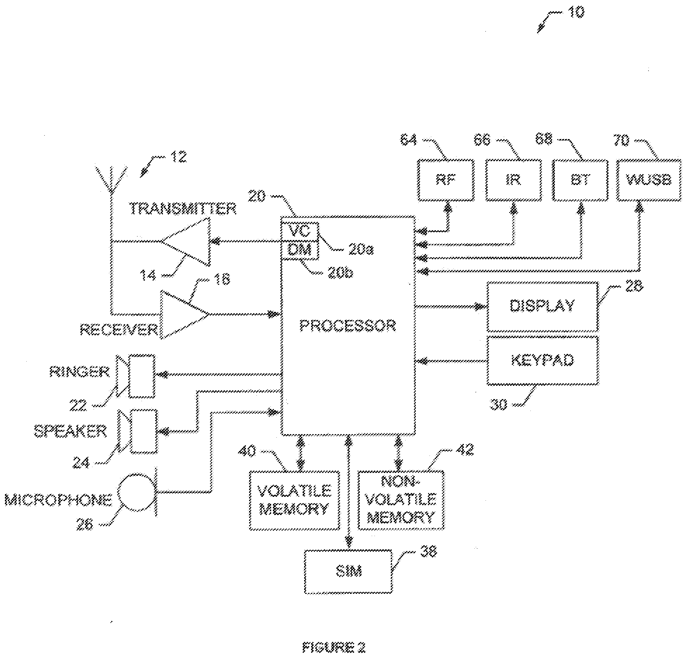

FIGURE 2 illustrates a block diagram of an apparatus 10 such as, for example, a mobile terminal, in accordance with an example embodiment of the invention. While several features of the apparatus are illustrated and will be hereinafter described for purposes of example, other types of electronic devices, such as mobile telephones, mobile computers, portable digital assistants, PDAs, pagers, laptop computers, desktop computers, gaming devices, televisions, routers, home gateways, and other types of electronic systems, may employ various embodiments of the invention. Apparatus 10 may correspond to device 110 or device 120, for example.

As shown, the mobile terminal 10 may include at least one antenna 12 in communication with a transmitter 14 and a receiver 16. Alternatively transmit and receive antennas may be separate. The mobile terminal 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise processor 20 may be configured to control other elements of apparatus 10 by effecting control signaling via electrical leads connecting processor 20 to the other elements, such as for example a display or a memory. The processor 20 may, for example, be embodied as various means including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit, ASIC, or field programmable gate array, FPGA, or some combination thereof. Accordingly, although illustrated in FIG. 2 as a single processor, in some embodiments the processor 20 comprises a plurality of processors or processing cores. Signals sent and received by the processor 20 may include signaling information in accordance with an air interface standard of an applicable cellular system, and/or any number of different wireline or wireless networking techniques, comprising but not limited to Wi-Fi, wireless local access network, WLAN, techniques such as Institute of Electrical and Electronics Engineers, IEEE, 802.11, 802.16, and/or the like. In addition, these signals may include speech data, user generated data, user requested data, and/or the like. In this regard, the apparatus may be capable of operating with one or more air interface standards, communication protocols, modulation types, access types, and/or the like. More particularly, the apparatus may be capable of operating in accordance with various first generation, 1G, second generation, 2G, 2.5G, third-generation, 3G, communication protocols, fourth-generation, 4G, communication protocols, Internet Protocol Multimedia Subsystem, IMS, communication protocols, for example, session initiation protocol, SIP, and/or the like. For example, the apparatus may be capable of operating in accordance with 2G wireless communication protocols IS-136, Time Division Multiple Access TDMA, Global System for Mobile communications, GSM, IS-95, Code Division Multiple Access, CDMA, and/or the like. Also, for example, the mobile terminal may be capable of operating in accordance with 2.5G wireless communication protocols General Packet Radio Service. GPRS, Enhanced Data GSM Environment, EDGE, and/or the like. Further, for example, the apparatus may be capable of operating in accordance with 3G wireless communication protocols such as Universal Mobile Telecommunications System, UMTS, Code Division Multiple Access 2000, CDMA2000, Wideband Code Division Multiple Access, WCDMA, Time Division-Synchronous Code Division Multiple Access, TD-SCDMA, and/or the like. The apparatus may be additionally capable of operating in accordance with 3.9G wireless communication protocols such as Long Term Evolution, LTE, or Evolved Universal Terrestrial Radio Access Network, E-UTRAN, and/or the like. Additionally, for example, the apparatus may be capable of operating in accordance with fourth-generation, 4G, wireless communication protocols such as LTE Advanced and/or the like as well as similar wireless communication protocols that may be developed in the future.

Some Narrow-band Advanced Mobile Phone System, NAMPS, as well as Total Access Communication System, TACS, mobile terminal apparatuses may also benefit from embodiments of this invention, as should dual or higher mode phone apparatuses, for example, digital/analog or TDMA/CDMA/analog phones. Additionally, apparatus 10 may be capable of operating according to Wi-Fi or Worldwide Interoperability for Microwave Access, WiMAX, protocols.

It is understood that the processor 20 may comprise circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the mobile terminal may be allocated between these devices according to their respective capabilities. The processor may additionally comprise an internal voice coder, VC, 20a, an internal data modem, DM, 20b, and/or the like. Further, the processor may comprise functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the mobile terminal 10 to transmit and receive web content, such as location-based content, according to a protocol, such as wireless application protocol, WAP, hypertext transfer protocol, HTTP, and/or the like

Apparatus 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. Although not shown, the apparatus may comprise a battery for powering various circuits related to the mobile terminal, for example, a circuit to provide mechanical vibration as a detectable output. The user input interface may comprise devices allowing the apparatus to receive data, such as a keypad 30, a touch display, which is not shown, a joystick, which is not shown, and/or at least one other input device. In embodiments including a keypad, the keypad may comprise numeric 0-9 and related keys, and/or other keys for operating the apparatus.

As shown in FIG. 2, apparatus 10 may also include one or more means for sharing and/or obtaining data. For example, the apparatus may comprise a short-range radio frequency, RF, transceiver and/or interrogator 64 so data may be shared with and/or obtained from electronic devices in accordance with RF techniques. The apparatus may comprise other short-range transceivers, such as, for example, an infrared, IR, transceiver 66, a Bluetooth^{™}, BT, transceiver 68 operating using Bluetooth^{™} brand wireless technology developed by the Bluetooth^{™} Special Interest Group, a wireless universal serial bus, USB, transceiver 70 and/or the like, such as 802.15.4. The Bluetooth^{™} transceiver 68 may be capable of operating according to low power or ultra-low power Bluetooth^{™} technology, for example, Wibree^{™}, radio standards. In this regard, the apparatus 10 and, in particular, the short-range transceiver may be capable of transmitting data to and/or receiving data from electronic devices within a proximity of the apparatus, such as within 10 meters, for example. Although not shown, the apparatus may be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module, SIM, 38, a removable user identity module, R-UIM, and/or the like, which may store information elements related to a mobile subscriber. In addition to the SIM, the apparatus may comprise other removable and/or fixed memory. The apparatus 10 may include volatile memory 40 and/or non-volatile memory 42. For example, volatile memory 40 may include Random Access Memory, RAM, including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, etc., optical disc drives and/or media, non-volatile random access memory, NVRAM, and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing functions of the mobile terminal. For example, the memories may comprise an identifier, such as an international mobile equipment identification, IMEI, code, capable of uniquely identifying apparatus 10.

Without in any way limiting the scope, interpretation, or application of the claims appearing below, a technical effect of one or more of the example embodiments disclosed herein is that devices can forward data packets toward destinations with new destination addresses without understanding contents of the data packets. Another technical effect of one or more of the example embodiments disclosed herein is that duplicate messages are avoided. Another technical effect of one or more of the example embodiments disclosed herein is that transmit-only nodes are enabled to select from a list of recipients, where they want their data packets to tbe forwarded to.

Embodiments of the present invention may be implemented in software, hardware, application logic or a combination of software, hardware and application logic. The software, application logic and/or hardware may reside on memory 40, the control apparatus 20 or electronic components, for example. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable non-transitory storage medium that may be any media or means that can contain or store the instructions for use by or in connection with an instruction execution system, apparatus, or device, such as a computer. The scope of the invention comprises computer programs configured to cause methods according to embodiments of the invention to be performed.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. An apparatus (10), comprising:
means for receiving (16) a data packet;
means for determining (20), based on contents of the data packet, a new destination address for the packet, wherein the received data packet does not comprise the new destination address in a header field;
means for inserting (20) the new destination address into a destination address header field of the data packet; and
means for causing (14) the data packet to be transmitted after the new destination address has been inserted,
**characterized in that**
the means for determining (20) are configured to determine the new destination address by determining a compression context used to compress the data packet, and by selecting the new destination address based on the compression context.

2. An apparatus (10)according to claim 1, wherein the apparatus is configured to determine the compression context using a LOWPAN_IPHC Context Identifier Extension.

3. An apparatus (10) according to claim 2, wherein the means for determining (20) are configured to use a mapping between a compression context identity and a destination address to select the new destination address based on the compression context.

4. An apparatus (10) according to any preceding claim, wherein the data packet comprises the new destination address in a non-header section.

5. An apparatus (10) according to claim 1, wherein the means for determining (20) are configured to determine the new destination address based on at least one of a service identifier, a channel identifier relating to the data packet and a header field value comprised in the data packet.

6. An apparatus (10) according to any preceding claim, wherein the means for determining (20) are configured to select a new source address for the data packet, and to insert the new source address into a source address header field of the data packet.

7. An apparatus (10) according to any preceding claim, wherein the apparatus (10) is configured to wait before causing the data packet to be transmitted, and responsive to receiving during the wait a duplicate of the data packet, to discard the duplicate.

8. An apparatus (10) according to any preceding claim, wherein the new destination address is either a multicast address or an address of a type that advises recipients of the data packet to not respond to the packet.

9. A method, comprising the steps of:
receiving (610) a data packet;
determining (620), based on contents of the data packet, a new destination address for the packet, wherein the received data packet does not comprise the new destination address in a header field;
inserting (630) the new destination address into a destination address header field of the data packet; and
causing (640) the data packet to be transmitted after the new destination address has been inserted,
**characterized in that**
the determining (620) comprises determining the new destination address by determining a compression context used to compress the data packet, and by selecting the new destination address based on the compression context.

10. A method according to claim 9, wherein the compression context is determined using a LOWPAN_IPHC Context Identifier Extension.

11. A method according to claim 10, comprising using a mapping between a compression context identity and a destination address to select the new destination address based on the compression context.

12. An apparatus, comprising:
means for forming a data packet;
means for selecting a destination address for the data packet
means for defining contents of the data packet based at least in part on the selected destination address, wherein after the defining the data packet does not comprise the selected destination address in a header field; and
means for causing the data packet to be transmitted,
**characterized in that**
the means for defining are configured to define the contents of the data packet by selecting a compression context based on the selected destination address, and applying the compression context to compress the data packet.

13. An apparatus according to claim 12, wherein the apparatus is configured to determine the compression context using a LOWPAN_IPHC Context Identifier Extension.

14. A method, comprising the steps of:
forming (710) a data packet;
selecting (720) a destination address for the data packet;
defining (730) contents of the data packet based at least in part on the selected destination address, wherein after the defining the data packet does not comprise the selected destination address in a header field; and
causing (740) the data packet to be transmitted,
**characterized in that**
the defining comprises selecting a compression context based on the selected destination address, and applying the compression context to compress the data packet.

15. A computer program configured to cause a method according to at least one of claims 9 - 11 or 14 to be performed.

## Patentansprüche

1. Verfahren zum Überwachen eines Rohrleitungssystems (2) und/oder der Detektion von einem oder mehreren Vorkommnissen in einem Rohrleitungssystem, das ein Absperrventil (12) aufweist, das in dem Rohrleitungssystem angeordnet ist, wobei das Verfahren die Schritte aufweist von
a) Kontinuierliches oder im Wesentlichen kontinuierliches Abtasten von auf die Strömung in dem Rohrleitungssystem bezogenen Werten;
b) Erhalten eines Strömungsmusters für das Rohrleitungssystem aus den auf die Strömung bezogenen Werten, die in Schritt a) erhalten wurden;
c) Bestimmen von einem oder mehreren Parametern aus dem Strömungsmuster;
d) Überwachen und/oder Testen des Rohrleitungssystems während der Verwendung von einem oder mehreren Parametern, die in Schritt c) bestimmt wurden,
**dadurch gekennzeichnet, dass**
in Schritt c) ein Parameter das Auftreten von einer oder mehreren strömungsfreien Perioden ist.

2. Verfahren nach Anspruch 1, wobei Schritt d) den folgenden Schritt aufweist:
d1) Durchführen des Drucktestens während zumindest einer störungsfreien Periode, die gemäß Schritt c) bestimmt wurde; wobei das Drucktesten bevorzugt durch Schließen des Ventils und Überwachen des Drucks in dem Rohrleitungssystem stromabwärts des Absperrventils durchgeführt wird.

3. Verfahren nach Anspruch 2, wobei ein gemessener Druckabfall in Schritt d1) mit einem Druckabfall-Grenzwert verglichen wird zum Detektieren des Auftretens von Leckage in dem Rohrleitungssystem.

4. Verfahren nach Anspruch 2 oder 3, wobei der Druck abgetastet wird und der Druckabfall zwischen zwei Abtastungen mit einem zweiten Druckabfall-Grenzwert verglichen wird, und wobei das Drucktesten abgebrochen wird, wenn dieser zweite Druckabfall-Grenzwert überschritten wird.

5. Verfahren nach einem der Ansprüche 2 bis 4, wobei das Drucktesten während einer Mehrzahl von strömungsfreien Perioden, die zeitlich nicht aneinander angrenzen, durchgeführt wird.

6. Verfahren nach einem der Ansprüche 2 bis 5, wobei eine Handlung durchgeführt wird, wenn das Auftreten von Leckage detektiert worden ist, wobei die Handlung einen oder mehrere der folgenden Schritte aufweist:
Geschlossenhalten des Absperrventils;
Senden eines elektronischen Signals an eine weitere elektronische Einheit;
Ausgeben eines Alarms.

7. Verfahren nach einem der vorherigen Ansprüche, wobei in Schritt c) ein Parameter ein Strömungslängen-Grenzwert ist, und wobei Schritt d) die folgenden Schritte aufweist:
d2) Aufzeichnen der Zeit während der eine Strömung vorliegt;
d3) Vergleichen dieser Zeit mit dem Strömungslängen-Grenzwert, und
d4) Durchführen einer Handlung, wenn dieser Strömungslängen-Grenzwert überschritten wird.

8. Verfahren nach Anspruch 7, wobei die Handlung einen oder mehrere der folgenden Schritte aufweist:
Schließen des Absperrventils und dann erneutes Öffnen dessen;
Schließen des Absperrventils;
Senden eines Signals an eine weitere elektronische Einheit;
Ausgeben eines Alarms.

9. Verfahren nach Anspruch 7 oder 8, wobei der Strömungslängen-Grenzwert, mit einem Koeffizienten multipliziert, als die längste Zeit, während der eine kontinuierliche Strömung aufgezeichnet worden ist, bestimmt wird.

10. Verfahren nach Anspruch 9, wobei der Strömungslängen-Grenzwert gemäß dem Folgenden aktualisiert wird:
gemessene Strömungslänge wird mit einem gespeicherten größten Wert für die Strömungslänge verglichen;
wenn die gemessene Strömungslänge größer ist als der gespeicherte größte Wert für die Strömungslänge, die gemessene Strömungslänge dann als der größte Wert für die Strömungslänge gespeichert wird, und der Strömungslängen-Grenzwert darauf basierend aktualisiert wird.

11. Verfahren nach einem der vorherigen Ansprüche, wobei in Schritt c) ein Parameter ein Strömungsänderung-Grenzwert ist, und wobei Schritt d) die folgenden Schritte aufweist:
d5) Berechnen der Strömungsänderung zwischen zwei abgetasteten Strömungswerten;
d6) Vergleichen dieser Strömungsänderung mit dem Strömungsänderung-Grenzwert, und
d7) Durchführen einer Handlung, wenn dieser Strömungsänderung-Grenzwert überschritten wird.

12. Verfahren nach Anspruch 11, wobei die Handlung einen oder mehrere der folgenden Schritte aufweist:
Schließen des Absperrventils und dann erneutes Öffnen dessen;
Schließen des Absperrventils;
Senden eines Signals an eine weitere elektronische Einheit;
Ausgeben eines Alarms.

13. Verfahren nach einem der vorherigen Ansprüche, wobei das Strömungsmuster kontinuierlich aktualisiert wird.

14. System (1) zum Überwachen von Strömung und/oder zum Detektieren von einem oder mehreren Vorkommnissen in einem Rohrleitungssystem (2); wobei das System aufweist:
eine Ventileinheit (8), die angepasst ist, mit dem Rohrleitungssystem (2) verbunden zu werden, und eine Steuereinheit (10), die angepasst ist, mit der Ventileinheit (8) zu kommunizieren, und wobei die Ventileinheit (8) ein Absperrventil (12) aufweist, das angepasst ist, einen Einlass zu dem Rohrleitungssystem zu öffnen und/oder zu schließen, ein Druckmessgerät (14) das stromabwärts des Absperrventils (12) vorgesehen ist, um den Druck in dem Rohrleitungssystem (2) zu messen, ein Strömungsmessgerät (16) das vorgesehen ist, um die Strömung in dem Rohrleitungssystem (2) zu messen;
wobei die Steuereinheit (10) angepasst ist, mit dem Absperrventil (12) zu kommunizieren, um das Schließen und/oder Öffnen desselben zu steuern,
das Strömungsmessgerät (16), um Daten aus dem Strömungsmessgerät (16) zu erhalten und aufzuzeichnen, und mit dem Druckmessgerät (14), um Daten aus dem Druckmessgerät (14) zu erhalten, wobei die Steuereinheit (10) angepasst ist, mit der Ventileinheit (8) zu kommunizieren, um ein Verfahren nach einem der Ansprüche 1 bis 13 durchzuführen.

15. System (1) nach Anspruch 14, wobei die Steuereinheit (10) angepasst ist, das Schließen des Absperrventils (12) basierend auf der Detektion von einem oder mehreren der folgenden Vorkommnisse zu aktivieren:
Leckage, Tropfleckage, eine Strömung, die für eine lange Zeit fortwährt, eine ausgeprägte Strömungsänderung, eine ausgeprägte Strömung, wobei bevorzugt die Steuereinheit (10) konfiguriert ist, einen zweiten Betriebszustand zu aktivieren, wenn keine Strömung bestimmt wird während einer Zeitperiode, die einen vorbestimmten Grenzwert zum Aktivieren des zweiten Betriebszustands überschreitet.

## Revendications

1. Procédé de surveillance d'un système de tuyauterie (2) et/ou de détection d'un ou de plusieurs évènements dans un système de tuyauterie qui comprend une valve d'arrêt (12), agencée dans ledit système de tuyauterie, ledit procédé comprenant les étapes de
a) échantillonnage en continu ou sensiblement en continu de valeurs liées au flux dans ledit système de tuyauterie ;
b) à partir desdites valeurs liées au flux obtenues à l'étape a), obtention d'un motif de flux pour ledit système de tuyauterie ;
c) à partir dudit motif de flux, détermination d'un ou de plusieurs paramètres ;
d) surveillance et/ou test du système de tuyauterie pendant une utilisation d'un ou de plusieurs paramètres déterminés à l'étape c),
**caractérisé en ce que**
à l'étape c) un paramètre est l'occurrence d'une ou de plusieurs périodes libres de flux.

2. Procédé selon la revendication 1, moyennant quoi l'étape d) comprend l'étape suivante :
d1) réalisation de test de pression pendant au moins une période libre de flux déterminée selon c) ; moyennant quoi le test de pression est de préférence réalisé par fermeture de la valve et surveillance de la pression dans le système de tuyauterie en aval de la valve d'arrêt.

3. Procédé selon la revendication 2, moyennant quoi une chute de pression mesurée à l'étape d1) est comparée avec un seuil de chute de pression pour détecter l'occurrence de fuite dans le système de tuyauterie.

4. Procédé selon la revendication 2 ou 3, moyennant quoi la pression est échantillonnée et la chute de pression entre deux échantillons est comparée avec un second seuil de chute de pression, et moyennant quoi le test de pression est interrompu si ce second seuil de chute de pression est excédé.

5. Procédé selon l'une quelconque des revendications 2 à 4, moyennant quoi un test de pression est réalisé pendant une pluralité de périodes libres de flux, qui ne sont pas adjacentes les unes aux autres dans le temps.

6. Procédé selon l'une quelconque des revendications 2 à 5, moyennant quoi une action est réalisée si l'occurrence de fuite a été détectée, moyennant quoi ladite action comprend une ou plusieurs des étapes suivantes :
maintien de la valve d'arrêt fermée ;
envoi d'un signal électronique à une autre unité électronique ;
émission d'une alarme.

7. Procédé selon une quelconque revendication précédente, moyennant quoi à l'étape c) un paramètre est un seuil de longueur de flux,
et moyennant quoi l'étape d) comprend les étapes suivantes :
d2) enregistrement du temps pendant lequel un flux est en cours ;
d3) comparaison de ce temps avec le seuil de longueur de flux, et
d4) réalisation d'une action s'il excède ce seuil de longueur de flux.

8. Procédé selon la revendication 7, moyennant quoi ladite action comprend une ou plusieurs des étapes suivantes :
fermeture de la valve d'arrêt et ensuite ouverture de celle-ci de nouveau ;
fermeture de la valve d'arrêt ;
envoi d'un signal à l'autre unité électronique ;
émission d'une alarme.

9. Procédé selon la revendication 7 ou 8, moyennant quoi le seuil de longueur de flux est déterminé comme le temps le plus long pendant lequel un flux continu a été enregistré, multiplié par un coefficient.

10. Procédé selon la revendication 9, moyennant quoi le seuil de longueur de flux est mis à jour selon ce qui suit :
une longueur de flux mesurée est comparée à une valeur la plus élevée sauvegardée pour une longueur de flux ;
si une longueur de flux mesurée est supérieure à ladite valeur la plus élevée sauvegardée pour une longueur de flux, ensuite une longueur de flux mesurée est sauvegardée comme la valeur la plus élevée pour la longueur de flux, et le seuil de longueur de flux est mis à jour sur cette base.

11. Procédé selon une quelconque revendication précédente, moyennant quoi à l'étape c) un paramètre est un seuil de changement de flux,
et moyennant quoi l'étape d) comprend les étapes suivantes :
d5) calcul du changement de flux entre deux valeurs de flux échantillonnées ;
d6) comparaison de ce changement de flux avec le seuil de changement de flux, et
d7) réalisation d'une action s'il excède ce seuil de changement de flux.

12. Procédé selon la revendication 11, moyennant quoi ladite action comprend une ou plusieurs des étapes suivantes :
fermeture de la valve d'arrêt et ensuite ouverture de celle-ci de nouveau ;
fermeture de la valve d'arrêt ;
envoi d'un signal à une autre unité électronique ;
émission d'une alarme.

13. Procédé selon une quelconque revendication précédente, moyennant quoi ledit motif de flux est mis à jour en continu.

14. Système (1) de surveillance de flux et/ou de détection d'un ou de plusieurs évènements dans un système de tuyauterie (2) ; dans lequel le système comprend :
une unité de valve (8) adaptée pour être reliée audit système de tuyauterie (2) et une unité de commande (10) adaptée pour communiquer avec l'unité de valve (8), dans lequel ladite unité de valve (8) comprend
une valve d'arrêt (12) adaptée pour ouvrir et/ou fermer une entrée audit système de tuyauterie,
un manomètre (14) prévu en aval de ladite valve d'arrêt (12) pour mesurer une pression dans ledit système de tuyauterie (2),
un débitmètre (16) prévu pour mesurer un flux dans ledit système de tuyauterie (2);
dans lequel ladite unité de commande (10) est adaptée pour communiquer avec ladite valve d'arrêt (12) pour commander une fermeture et/ou une ouverture de celle-ci,
ledit débitmètre (16) pour obtenir et enregistrer des données dudit débitmètre (16), et avec ledit manomètre (14) pour obtenir des données dudit manomètre (14), dans lequel
ladite unité de commande (10) est adaptée pour communiquer avec ladite unité de valve (8) pour réaliser un procédé selon l'une quelconque des revendications 1 à 13.

15. Système (1) selon la revendication 14, dans lequel ladite unité de commande (10) est adaptée pour activer une fermeture de ladite valve d'arrêt (12) sur la base de la détection d'un ou de plusieurs événements suivants :
fuite, fuite d'égouttement, un flux qui est en cours pour un long temps, un changement de flux important, un flux important, dans lequel de préférence ladite unité de commande (10) est configurée pour activer un second état opérationnel si aucun flux n'est détecté pendant une période de temps qui excède un seuil prédéterminé pour l'activation dudit second état opérationnel.
